## Europäisches Patentamt
## European Patent Office
## Office européen des brevets

(19)

(11) Veröffentlichungsnummer : **0 101 072**
**B1**

(12) **EUROPÄISCHE PATENTSCHRIFT**

(45) Veröffentlichungstag der Patentschrift :
07.05.86

(51) Int. Cl.⁴ : **B 60 K   5/12, F 16 F   9/10**

(21) Anmeldenummer : **83107920.7**

(22) Anmeldetag : **11.08.83**

(54) **Flüssigkeitsgedämpftes Gummilager.**

(30) Priorität : **17.08.82 DE 3230485**

(43) Veröffentlichungstag der Anmeldung :
**22.02.84 Patentblatt 84/08**

(45) Bekanntmachung des Hinweises auf die Patenterteilung : **07.05.86 Patentblatt 86/19**

(84) Benannte Vertragsstaaten :
**DE FR GB IT**

(56) Entgegenhaltungen :
**CH-A-   577 126**
**DE-A- 2 712 641**
**DE-A- 3 005 983**
**DE-C-   945 899**
**FR-A- 2 218 508**
**FR-A- 2 242 605**
**FR-A- 2 255 507**
**FR-A- 2 451 511**
**GB-A- 2 055 172**
**GB-A- 2 079 894**
**US-A- 3 888 450**
**PATENTS ABSTRACTS OF JAPAN, Band 4, Nr. 171(M-44) (653), 26. November 1980**
**PATENTS ABSTRACTS OF JAPAN, Band 4, Nr. 64(M-11) (546), 14. Mai 1980, Seite 134M11**

(73) Patentinhaber : **Firma Carl Freudenberg**
**Höhnerweg 4**
**D-6940 Weinheim/Bergstrasse (DE)**

(72) Erfinder : **Kurtze, Günther, Prof. Dr. rer. nat.**
**Klingenweg 14**
**D-6940 Weinheim (DE)**

(74) Vertreter : **Weissenfeld-Richters, Helga, Dr.**
**Höhnerweg 2**
**D-6940 Weinheim/Bergstrasse (DE)**

**Beschreibung**

Die Erfindung betrifft ein flüssigkeitsgedämpftes Gummilager, bestehend aus einer Trag- und einer Lagerplatte, die durch eine Gummifeder mit einem darin enthaltenen Hohlraum verbunden sind, wobei der Hohlraum mit einer viskoelastischen Flüssigkeit vollständig ausgefüllt ist, in welche mindestens ein mit der Tragplatte und/oder der Lagerplatte verbundener, inkompressibler Körper eintaucht.

Ein Gummilager der vorgenannten Art wird in der JP-A-55 30 563 gezeigt. Die damit erzielte Dämpfungswirkung ist von der Viskosität der enthaltenen Flüssigkeit abhängig. Diese ist während der Benutzung eines solchen Gummilagers nicht veränderbar und somit als gleichbleibend anzunehmen. Eine hervorzuhebende Isolierwirkung ist nicht erwähnt.

Die JP-A-55 123 032 zeigt ein ähnliches Gummilager, bei dem der Hohlraum nur teilweise mit einer hochmolekularen, viskosen Flüssigkeit gefüllt ist, in die der mit der Tragplatte verbundene, inkompressibler Verdrängungskörper teilweise eintaucht. Bei Einleitung von Schwingungen ergibt sich so ein ständig variierendes Volumen an verdrängter Flüssigkeit, und diese gewinnt in Abhängigkeit von der Geschwindigkeit, mit der das Eintauchen erfolgt zunehmend an Härte. Relativbewegungen einer drastischen, d. h. großen Amplitude werden dadurch begrenzt. Eine Isolierung bestimmter Schwingungen wird nicht erwähnt.

Die bekannten elastischen Lagerungen von Maschinen bewirken eine Schwingungsisolierung erst oberhalb der √2-fachen Resonanzfrequenz, wobei diese durch die Federsteife der Federn und die Masse der Maschine bestimmt ist. Erregungen bei tieferen Frequenzen, insbesondere bei der Resonanzfrequenz führen zu unerwünschten, überhöhten Amplituden der schwingenden Maschine. Eine Dämpfung solcher Schwingungen ist daher zwingend erforderlich.

Beispiele für die Dämpfung von Gummilagern, die sich der Verwendung viskoser Medien bedienen, wurden eingangs behandelt. Sie ermöglichen die Erzielung höherer Dämpfungswerte, bedingen aber zugleich eine Verschlechterung der Schwingungsisolierung bei hohen Frequenzen.

Der Nachteil einer Verschlechterung der Schwingungsisolierung bei hohen Frequenzen tritt insbesondere bei Verwendung hochviskoser Medien deutlich in Erscheinung. Ihre Verwendung ist daher problematisch, jedoch verspricht auch die Verwendung von niederviskosen Medien nicht ohne weiteres eine wirksame Abhilfe. Bei der Verwendung solcher Flüssigkeiten ergibt sich nämlich der Nachteil, daß bei Entlastung der Gummifeder, zumindest bei großen Schwingungsamplituden, Unterdruckphasen auftreten können, die dann zu Kavitation führen. Das ist jedoch gleichbedeutend mit der Bildung kompressiblen Schaumes, der die Dämpfungswirkung beträchtlich vermindert.

Der Erfindung liegt die Aufgabe zugrunde, ein unter Verwendung einer viskosen Flüssigkeit gedämpftes Gummilager zu entwickeln, das eine gute Dämpfung niederfrequenter Schwingungen gewährleistet sowie eine gute Isolierung hochfrequenter Schwingungen.

Diese Aufgabe wird erfindungsgemäß mit einem Gummilager der eingangs genannten Art gelöst, das die kennzeichnenden Merkmale des Patentanspruchs aufweist. Auf vorteilhafte Ausgestaltungen nehmen die Unteransprüche Bezug.

Das vorgeschlagene Gummilager hat den Vorteil, extrem einfach konstruiert zu sein. Seine Funktion wird anhand der in der Anlage beigefügten Zeichnungen nachfolgend näher erläutert. Es zeigen:

Figur 1a und 1b Eine zylindrische Ausführung im entlasteten Zustand und im belasteten Zustand.

Figur 2 Eine Ausführung ähnlich Figur 1, bei der zwei Verdrängungkörper in den Hohlraum hineinragen und bei der der obere Verdrängungskörper zusätzlich eine Stirnflächenbeschichtung aus einem geschlossenzelligen Weichschaum aufweist.

Figur 3 Eine spezielle Ausführungsform des Gummilagers in quergeschnittener Darstellung.

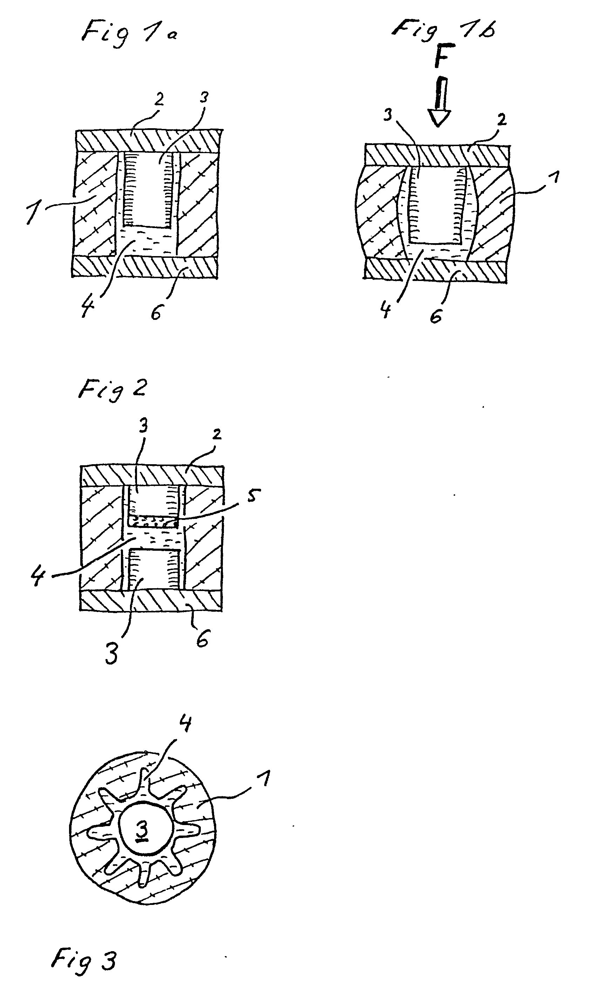

Das Gummilager in Figur 1a ist in unbelastetem, in Figur 1b in belastetem Zustand dargestellt. Es besteht aus einer hohlzylindrischen Gummifeder 1, die am oberen Ende an eine Tragplatte 2 und am unteren Ende an einer Lagerplatte 6 anvulkanisiert ist. Trag- und Lagerplatte verschließen zugleich den in der Gummifeder enthaltenen Hohlraum. In diesen hinein ragt ein inkompressibler Verdrängungskörper aus Metall, der mit der Lagerplatte 2 starr verbunden ist. Das kleinere Restvolumen des Hohlraumes 4 ist mit einer viskoelastischen, hochmolekularen Flüssigkeit vollständig ausfüllt.

Bei Belastung der Gummifeder wird, da das Hohlraumvolumen wegen der Inkompressibilität der Flüssigkeit konstant bleibt, der Gummikörper tonnenförmig deformiert, wobei die Flüssigkeit in den Raum zwischen Verdrängungskörper und Gummifeder eingepreßt wird. Bei Entlastung drückt die radial gedehnte Gummifeder die Flüssigkeit wieder an den Ausgangsort zurück. Es entsteht so zu keinem Zeitpunkt ein Unterdruck im Hohlraum und damit auch nicht die Gefahr von Kavitationserscheinungen.

Durch Wahl des Verhältnisses zwischen Gummiquerschnitt und Hohlraumquerschnitt, durch Wahl der Spaltbreite zwichen Hohlraumwand und Verdrängungskörper sowie durch die gewählte Viskosität der Flüssigkeit kann der Verlustwinkel der Gummifeder in weiten Grenzen variiert werden.

Es ist vorteilhaft, als Flüssigkeit Silikonöl zu verwenden. Dadurch wird einerseits die Temperaturabhängigkeit der Dämpfung minimiert, andererseits hat Silikonöl, wie auch andere hochmolekulare Flüssigkeiten. die Eigenschaft, daß es sich nur bis zu einer vom Molekulargewicht abhängigen Relaxationsfrequenz viskos verhält, bei höheren Frequenzen jedoch elastisch wird. Die bei Einleitung von Schwingungen einer niedrigen Frequenz viskosen Eingeschaften der Flüssigkeit, die die in diesem Falle erwünschte Dämpfung bewirken, sind somit durch die erfindungsgemäß vorgeschlagene Abstimmung bei Einleitung von Schwingungen einer hohen Frequenz nicht mehr vorhanden und durch elastische Eigenschaften ersetzt. Die gute Dämpfung niederfrequenter Schwingungen steht daher bei der erfindungsgemäß vorgeschlagenen Ausführung der Erzielung eine guten Isolierung hochfrequenter Schwingungen nicht mehr entgegen.

Die zur Anwendung gelangende, hochmolekulare Flüssigkeit soll eine Relaxationsfrequenz haben, die an der Obergrenze des Frequenzbereiches liegt, in dem Dämpfung erzielt werden soll. Sie wird bei hochmolekularen Flüssigkeiten durch das Molekulargewicht bestimmt und damit durch eine Größe, die bei der technischen Beschreibung entsprechender Flüssigkeiten gebräuchlich ist. Die erfindungsgemäß vorgeschriebene Auswahl einer Sorte mit ganz bestimmter Relaxationsfrequenz bereitet daher keine Schwierigkeiten und kann im äußersten Falle aufgrund einfachster Versuche erfolgen. Beispielsweise Silikonöl mit Molekulargewichten von 1 000 bis 150 000 und entsprechend variierten Relaxationsfrequenzen sind im Handel erhältlich.

Gegenüber fast allen nach dem Stande der Technik üblichen Ausführungsformen hat insbesondere die Ausführung nach Figur 1 den Vorteil, eine wirksame Dämpfung für Schwingungen in allen drei Raumrichtungen zu liefern. Dabei kann es zweckmäßig sein, gummielastische Verdrängungkörper zu verwenden, die ebenfalls inkompressibel, jedoch deformierbar sind, weil hierdurch größere Schwingweiten senkrecht zur Achse der Feder möglich werden.

Insbesondere bei der Lagerung von Verbrennungsmotoren ist es oft erwünscht, eine möglichst geringe Federsteife und keine Dämpfung bei Körperschallfrequenzen oberhalb 100 Hz zu haben. Da es sich hierbei um Auslenkungen unter 0,1 mm handelt, kann dieses Ziel durch eine nicht lineare Federcharakteristik erreicht werden. Zu diesem Zweck kann man, wie beispielsweise in Figur 2 gezeigt, eine dünne, kompressible Schaumstoff-Folie an der Unterseite des bewegten Verdrängungskörper anbringen. Die Flüssigkeit wird dann erst verdrängt, wenn die Schaumstoff-Folie hinreichend stark komprimiert ist. Voraussetzung ist natürlich, daß ein Eindringen von Flüssigkeit in die Schaumstoff-Folie unterbunden wird, was durch Verwendung einer Schaumstoff-Folie aus einem geschlossenzelligen Weichschaum erfolgen kann bzw. einer Umhüllung aus einem flüssigkeitsundurchlässigen, nachgiebigen Material.

Die minimal wirksame Federsteife in axialer Richtung ist durch die Steife der hohlzylindrischen Gummifeder 1 gegeben. Auch dieser Wert läßt sich aber bei höheren Frequenzen unterschreiten, wenn man die Radial-Eigenschwingungen der Gummifeder ausnutzt, denn bei der Eigenfrequenz der Radialschwingung wird die dynamische Federsteife einer Hohlfeder extrem klein.

Die Eigenfrequenz der Radialschwingung hängt ab von der Dichte des Gummimaterials und von seiner Zugsteife in Umfangsrichtung. Sie ist daher durch Füllstoffe und Weichmacher beeinflußbar und hängt zudem von den Dimensionen der Gummifeder ab. Eine Verschiebung zu tieferen Frequenzen ist überdies durch Einkerbung an der Innen- und/oder Außenseite der Hohlfeder in axialer Richtung erzielbar, durch die die Umfangszugsteife erheblich vermindert wird, während die Masse nahezu unverändert bleibt. Auf eine beispielhafte Formgebung des Profils nimmt Figur 3 Bezug.

**Patentansprüche**

1. Flüssigkeitsgedämpftes Gummilager, bestehend aus einer Trag- und einer Lagerplatte (2, 6), die durch eine Gummifeder (1) mit einem darin enthaltenen Hohlraum (4) verbunden sind, wobei der Hohlraum mit einer viskoelastischen Flüssigkeit vollständig gefüllt ist, in welche mindestens ein mit der Tragplatte (2) und/oder der Lagerplatte (6) verbundener, inkompressibler Verdrängungskörper (3) eintaucht, dadurch gekennzeichnet, daß der Verdrängungskörper (3) den Hohlraum zum größeren Teil ausfüllt und daß die Flüssigkeit eine hochmolekulare Flüssigkeit ist mit einer Relaxationsfrequenz, die an der Obergrenze des Frequenzbereiches liegt, in dem Dämpfung erzielt werden soll.

2. Gummilager nach Anspruch 1, dadurch gekennzeichnet, daß die hochmolekulare Flüssigkeit ein Silikonöl ist.

3. Gummilager nach Anspruch 1 bis 2, dadurch gekennzeichnet, daß der Hohlraum zur Erzielung einer progressiven Federungscharakteristik in einem Teilbereich durch einen Weichschaumkörper (5) begrenzt ist.

4. Gummilager nach Anspruch 3, dadurch gekennzeichnet, daß der Weichschaumkörper (5) und die Stirnseite wenigstens eines Verdrängungskörpers (3) verbunden sind.

5. Gummilager nach Anspruch 1 bis 4, dadurch gekennzeichnet, daß der oder die Verdrängungskörper (3) aus einem elastischen Material bestehen.

6. Gummilager nach Anspruch 1 bis 5, dadurch gekennzeichnet, daß die Radialresonanz der Gummifeder so abgestimmt ist, daß in einem bestimmten Frequenzbereich die Axialsteife der Gummifeder vermindert ist.

7. Gummilager nach Anspruch 6, dadurch gekennzeichnet, daß die gewünschte Eigenfrequenz der Radialschwingung durch Einkerbungen der Gummifeder in Längsrichtung eingestellt ist.

**Claims**

1. A rubber support with hydraulic damping, comprising a carrier plate and a bearing plate (2, 6), which are connected by a rubber spring (1) having a cavity (4) therein, the cavity being completely filled with a viscoelastic liquid into which at least one incompressible displacement body (3) connected with the carrier plate (2) and/or the bearing plate (6) extends, characterised in that the displacement body (3) occupies the greater part of the cavity, and in that the liquid is a liquid of high molecular weight having a relaxation frequency which is at the upper limit of the frequency range in which damping is to be achieved.

2. A rubber support according to claim 1, characterised in that the liquid of high molecular weight is a silicone oil.

3. A rubber support according to claim 1 or 2, characterised in that the cavity is bounded in part by a soft foam body (5) in order to achieve a progressive resilience characteristic.

4. A rubber support according to claim 3, characterised in that the soft foam body (5) and the end face of at least one displacement body (3) are connected.

5. A rubber support according to any of claims 1 to 4, characterised in that the displacement body or bodies (3) consist of an elastic material.

6. A rubber support according to any of claims 1 to 5, characterised in that the radial resonance of the rubber spring is tuned in such a manner that the axial stiffness of the rubber spring is reduced in a specific frequency range.

7. A rubber support according to claim 6, characterised in that the desired characteristic frequency of radial oscillation is set by indentations of the rubber spring in the longitudinal direction.

**Revendications**

1. Support en caoutchouc à amortissement hydraulique, constitué d'une plaque portante et d'une plaque de support (2, 6) qui sont reliées par un ressort en caoutchouc (1) contenant une cavité (4), cette cavité étant remplie complètement d'un liquide à viscosité élastique, dans lequel au moins un corps de déplacement (3) incompressible, fixé à la plaque portante (2) et/ou à la plaque de support (6) est immergé, caractérisé en ce que le corps de déplacement (3) remplit, en grande partie, la cavité et en ce que le liquide est un liquide à poids moléculaire élevé, avec une fréquence de relaxation qui est située à la limite supérieure de la gamme des fréquences dans laquelle on désire un amortissement.

2. Support en caoutchouc selon la revendication 1, caractérisé en ce que le liquide à poids moléculaire élevé est une huile de silicone.

3. Support en caoutchouc selon les revendications 1 et 3, caractérisé en ce que la cavité assurant une caractéristique élastique progressive est limitée partiellement par un corps en mousse molle (5).

4. Support en caoutchouc selon la revendication 3, caractérisé en ce que le corps en mousse molle (5) et la face frontale d'au moins un corps de déplacement (3) sont reliés ensemble.

5. Support en caoutchouc selon les revendications 1 à 4, caractérisé en ce que le ou les corps de déplacement (3) sont constitués d'un matériau élastique.

6. Support en caoutchouc selon les revendications 1 à 5, caractérisé en ce que la résonance radiale du ressort en caoutchouc est adaptée de manière à diminuer la rigidité axiale du ressort en caoutchouc dans une gamme de fréquences déterminée.

7. Support en caoutchouc selon la revendication 6, caractérisé en ce que la fréquence propre souhaitée des vibrations radiales est obtenue en pratiquant des encoches longitudinales dans le ressort en caoutchouc.

Fig 1a

Fig 1b

Fig 2

Fig 3